# EUROPEAN PATENT SPECIFICATION

(11) **EP 3 622 123 B1**
(45) Date of publication and mention of the grant of the patent: **17.11.2021**
(21) Application number: 18722238.5
(22) Date of filing: 19.04.2018
(51) Int. Cl.: E02F 7/10, F16L 1/26, B63B 35/03

(54) **FLOATING PIPELINE WITH COUPLING ASSEMBLY**
SCHWIMMENDE ROHRLEITUNG MIT KUPPLUNGSANORDNUNG
PIPELINE FLOTTANT COMPRENANT UN ENSEMBLE D'ACCOUPLEMENT

(30) Priority: 11.05.2017 NL 2018894
(43) Date of publication of application: 18.03.2020
(73) Proprietor: Baggermaatschappij Boskalis B.V., 3356 LK Papendrecht (NL)
(72) Inventor: VAN DER HULST, Ferry, 3356 LK Papendrecht (NL); TANIS, Adrianus, 3356 LK Papendrecht (NL)
(74) Representative: Geurts, Franciscus Antonius
(86) International application number: PCT/NL2018/050244
(87) International publication number: WO 2018/208145

(56) References cited:
- WO-A1-2013/070077
- US-A- 3 578 233
- US-A- 4 051 687
- US-A- 4 436 449
- US-A- 5 807 027

## Description

### BACKGROUND

The invention relates to floating pipelines for dredging applications.

In the art of dredging it is well known to install a series of floating pipeline sections between a dredging vessel and a shore to transport fluidized dredged soil. The floating pipeline sections are coupled by means of a flexible coupling or the pipeline sections are flexible themselves, both allowing the dredging vessel to make its necessary maneuvers during the dredging operations.

The floating pipeline sections can be preconfigured into strands on a beach and dragged from there into the water. When the prepared strands are coupled together, it is necessary to pull both ends onto the deck of a working vessel to operate the coupling. On deck the mating coupling parts are brought together by deck cranes, and the coupling is made manually by deck personnel. The same applies for releasing the coupling. This is clumsy and sometimes even dangerous for the deck personnel. When flexible floating pipeline sections are applied, there is even the risk of buckling at the outer edges of the deck.

There is a need for floating pipelines that can be coupled in a well-controlled and safe manner.

WO 2013/070077 discloses an assembly and a method for assembling a floating pipeline in accordance with the preambles of claims 1 and 10.

### SUMMARY OF THE INVENTION

According to a first aspect, the invention provides an assembly comprising a floating pipeline and a working vessel in the vicinity of the pipeline, wherein the pipeline comprises multiple floating pipeline sections and a coupling assembly for mutual coupling of subsequent pipeline sections, wherein the coupling assembly comprises a first buoyancy body and a first connector at the end of a first pipeline section, and a second buoyancy body and a second connector at the end of the second pipeline section for connecting cooperation with the first connector, and wherein the working vessel comprises a hull, a first winch, a second winch and a third winch on the hull, a first mooring cable around the first winch having a first fixation part at its free end, a second mooring cable around the second winch having a second fixation part at its free end, a third mooring cable around the third winch having a third fixation part at its free end, and a manipulator arm on the hull for manipulation of the fixation parts with respect to the hull, and wherein the coupling assembly comprises a first catcher on the first buoyancy body for fixating cooperation with the first fixation part, a second catcher on the second buoyancy body for fixating cooperation with the second fixation part, a third catcher on the second buoyancy body for fixating cooperation with the third fixation part, and a mooring cable guide on the first buoyancy body for guidance of the third mooring cable via the first buoyancy body to the second buoyancy body.

The floating pipeline according to the invention comprises a coupling assembly for coupling subsequent pipeline sections. The first buoyancy body and second buoyancy body keep the first connector and the second connector at about the same height with respect to the water to engage onto each other. By hauling in the first mooring cable and the second mooring cable by means of the first winch and second winch, the first buoyancy body and the second buoyancy body may be brought alongside the hull of the working vessel to align the first connector and the second connector. By hauling in the third mooring cable by means of the third winch, the first buoyancy body and the second buoyancy body are brought towards each other whereby the first connector and the second connector are coupled. This coupling can be fully performed by deck personnel on the working vessel by operating the manipulator arm and the winches, which is a safe operation.

In an embodiment the third catcher and the mooring cable guide are aligned in the longitudinal direction of the coupled pipeline sections, whereby they are brought towards each other in the longitudinal floating direction thereof.

In an embodiment the mooring cable guide comprises a sheave that is rotatable mounted to the first buoyancy body.

In an embodiment the first connector and the second connector comprise a first tube and a second tube that pass through the first buoyancy body and second buoyancy body, respectively, wherein the coupling assembly comprises first catchers on the first buoyancy body on opposite sides of the first tube, and second catchers on the second buoyancy body on opposite sides of the second tube. As the buoyancy bodies are provided with the respective catchers on both sides, they can be engaged from both sides of the pipeline to be built.

In an embodiment the fixation parts hang freely downwards and spaced apart from the manipulator arm when the mooring cables are transferred to the catchers by the manipulator arm, whereby the engagement of the fixation parts by means of the catchers can be performed with oversight.

In an embodiment the fixation parts comprise a rigid body that is connected with the mooring cable, and wherein the catchers comprise abutment faces for the rigid body that together define a vertically extending slot for passing through the mooring cable while the rigid body is in abutment with the abutment faces. The rigid body can be brought in fixating engagement with the abutment faces by feeding the mooring cable through the vertically extending slot.

In an embodiment the first connector or the second connector comprises a locking ring or spring ring for locking or releasing the mutual coupling, wherein the coupling assembly comprises an hydraulic cylinder for operating the locking ring or spring ring, wherein the hydraulic cylinder is connected with an hydraulic valve on the working vessel via an hydraulic hose that is connected with the working vessel by means of a releasable hydraulic coupling. The locking ring or spring ring can be remotely operated by deck personnel on the working vessel, which is a safe operation.

In an embodiment the first connector and the second connector form a male-female coupling.

In an embodiment multiple pipeline sections form a floating pipeline strand, wherein the outermost pipeline sections of subsequent pipeline strands are provided with the coupling assembly.

According to a second aspect, the invention provides a method for assembling a floating pipeline by means of a working vessel, wherein the pipeline comprises multiple floating pipeline sections and a coupling assembly for mutual coupling of subsequent pipeline sections, wherein the coupling assembly comprises a first buoyancy body and a first connector at the end of a first pipeline section, and a second buoyancy body and a second connector at the end of a second pipeline section for connecting cooperation with the first connector, and wherein the working vessel comprises a hull, a first winch, a second winch and a third winch on the hull, a first mooring cable around the first winch having a first fixation part at its free end, a second mooring cable around the second winch having a second fixation part at its free end, a third mooring cable around the third winch having a third fixation part at its free end, and a manipulator arm on the hull for manipulation of the fixation parts with respect to the hull, and wherein the coupling assembly comprises a first catcher on the first buoyancy body for fixating cooperation with the first fixation part, a second catcher on the second buoyancy body for fixating cooperation with the second fixation part, a third catcher on the second buoyancy body for fixating cooperation with the third fixation part, and a mooring cable guide on the first buoyancy body for guidance of the third mooring cable via the first buoyancy body to the second buoyancy body, wherein the method comprises bringing the first buoyancy body and the second buoyancy body within reach of the manipulator arm of the working vessel, by means of the manipulator arm bringing the first fixation part in fixating cooperation with the first catcher, by means of the manipulator arm bringing the second fixation part in fixating cooperation with the second catcher, by means of the manipulator arm bringing the third mooring cable in engagement with the mooring cable guide and bringing the third fixation part in fixating cooperation with the third catcher, and hauling in at least the third mooring cable by means of the third winch whereby the first buoyancy body and the second buoyancy body float towards each other and the first connector and the second connector engage onto each other.

In an embodiment thereof the first connector or the second connector comprises a locking ring or spring ring for locking or releasing the mutual coupling, wherein the coupling assembly comprises an hydraulic cylinder for operating the locking ring or spring ring, wherein the hydraulic cylinder is connectable with an hydraulic valve on the working vessel via an hydraulic hose that is connectable with the working vessel by means of a releasable hydraulic coupling, wherein the method comprises hauling in the hydraulic hose from the working vessel and connecting it by means of the releasable hydraulic coupling, and operating the locking ring or spring ring by means of the hydraulic valve on the working vessel.

### BRIEF DESCRIPTION OF THE DRAWINGS

The invention will be elucidated on the basis of an exemplary embodiment shown in the attached drawings, in which:
Figure 1 shows a working vessel with a mooring device, that is connected to a floating pipeline strand having a coupling assembly according to the invention.
Figures 2A-E show the coupling sequence of floating pipeline sections using the coupling assembly.
Figures 3A and 3B are a detailed isometric view and a vertical sectional view of the coupling assembly according to figure 1.
Figures 4A-D are detailed side views and a top view of the mooring device according to figure 1.

### DETAILED DESCRIPTION OF THE INVENTION

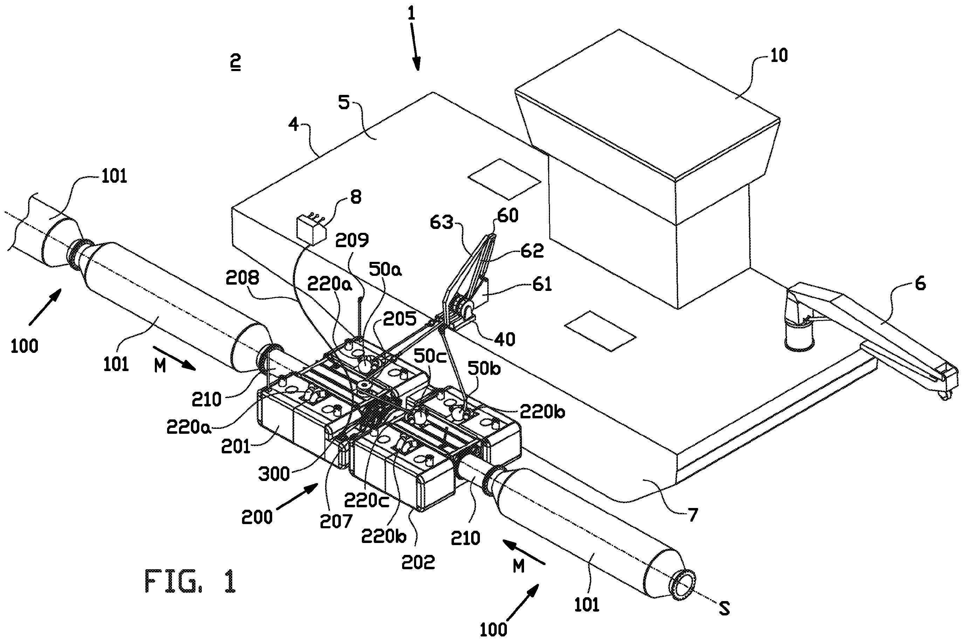

Figure 1 shows a working vessel 1, also known as a Multicat, near a dredging vessel that is not shown to handle floating pipeline strands 100 floating on the water 2. The working vessel 1 comprises a floating hull 4 having on the deck 5 a crane 6, a mooring assembly 40, a manipulator 60, a main cabin 10 and a remote control operating station 8. The floating pipeline strands 100 each comprise multiple floating pipeline sections 101 that are connected to each other and end up at the dredging vessel to transport fluidized dredged soil to the shore for example.

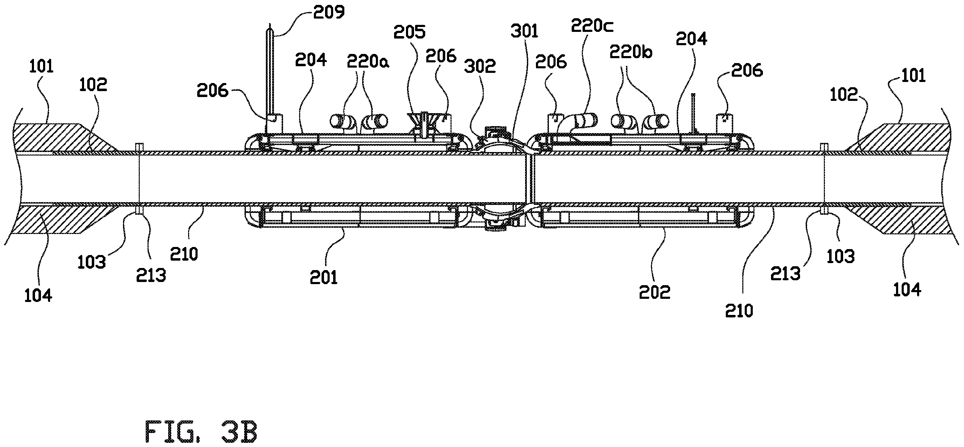

Figure 3B shows a cross section of two coupled floating pipeline sections 101. The floating pipeline sections 101 each comprise a sleeve 104 of rubber having a steel inner bushing 102 with end flanges 103 at both ends thereof. The end flanges 103 of the subsequent floating pipeline sections 101 are mounted to each other. The sleeves 104 provide sufficient buoyancy to keep the floating pipeline strands 100 at the water line of the surrounding water 2 when dredged soil is transported there through, and the sleeves 104 provide sufficient flexibility to allow the connected dredging vessel to maneuver with respect to the shore.

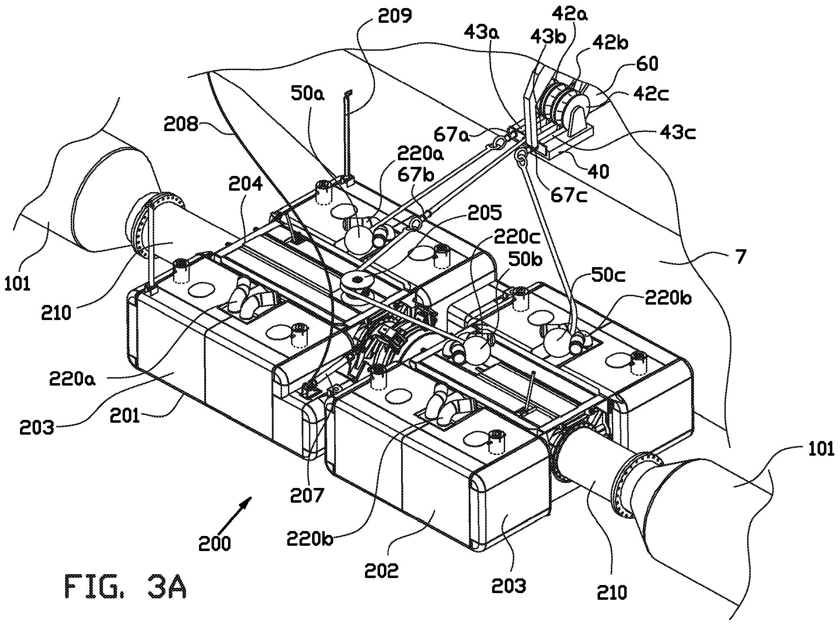

The floating pipeline strands 100 are connected to each other by means of a coupling assembly 200 according to the invention, which is shown in detail in figures 3A and 3B. In this example the coupling assembly 200 comprises a first floating coupling part 201 and a second floating coupling part 202. The coupling parts 201, 202 each comprise a box shaped hollow steel buoyancy body 203 and a steel tube section 210 passing through.

The steel tube section 210 of the first coupling part 201 comprises at one end an end flange 213 connected with a pipeline strand 100 and merges at the other end into a first connector 301. The steel tube section 210 of the second coupling part 202 comprises at one end an end flange 213 connected with a pipeline strand 100 and merges at the other end into a second connector 302. In this example the connectors 301, 302 are embodied as a female and male connector respectively for engagement onto each other. The first connector 301 comprises a locking ring or spring ring for locking or release the coupling. An hydraulic cylinder 207 is provided on the first coupling part 201 to lock or releasing the coupling. The hydraulic cylinder 207 is connected to the hydraulic system of the working vessel 1 by an hydraulic hose 208 and is operated from the remote control operating station 8.

As best shown in figure 3A the first coupling part 201 is at its upper deck 204 provided with first catchers 220a, a sheave 205 and boulders 206, wherein the first catchers 220a are positioned at both sides of the steel tube section 210 near the center of the upper deck 204. The sheave 205 is positioned straight above the steel tube section 210 near the first connector 301. The boulders 206 are positioned near the corners of the upper deck 204. The second coupling part 202 is at its upper deck 204 provided with second catchers 220b, a third catcher 220c and boulders 206, wherein the second catchers 220b are positioned at both sides of the steel tube section 210 near the center of the upper deck 204. The third catcher 220c is positioned straight above the steel tube section 210 near the first connector 301. The boulders 206 are positioned near the corners of the upper deck 204.

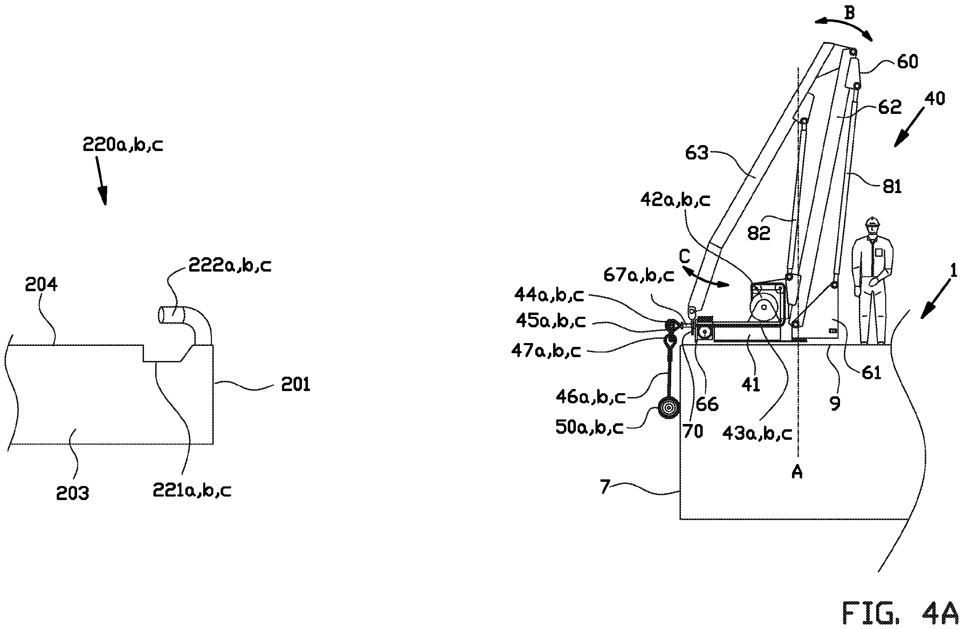

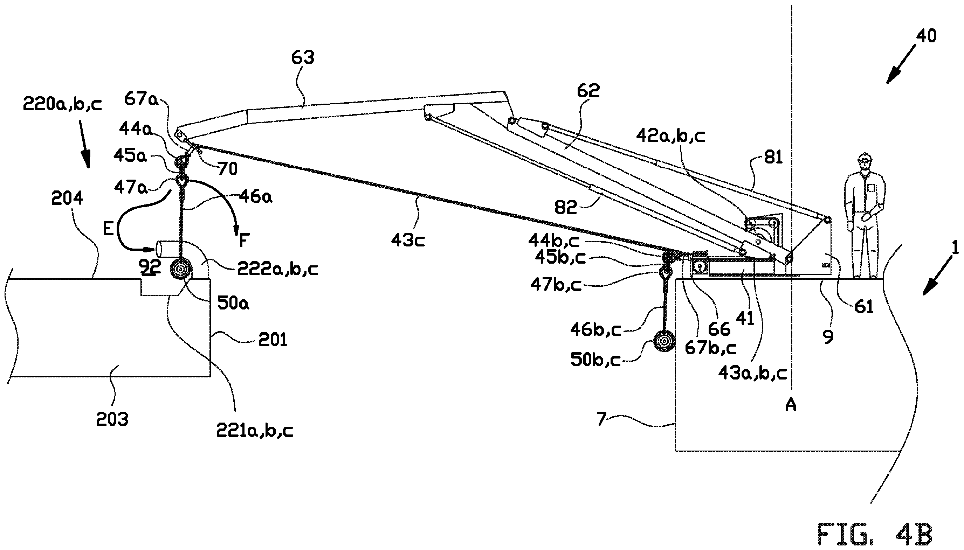

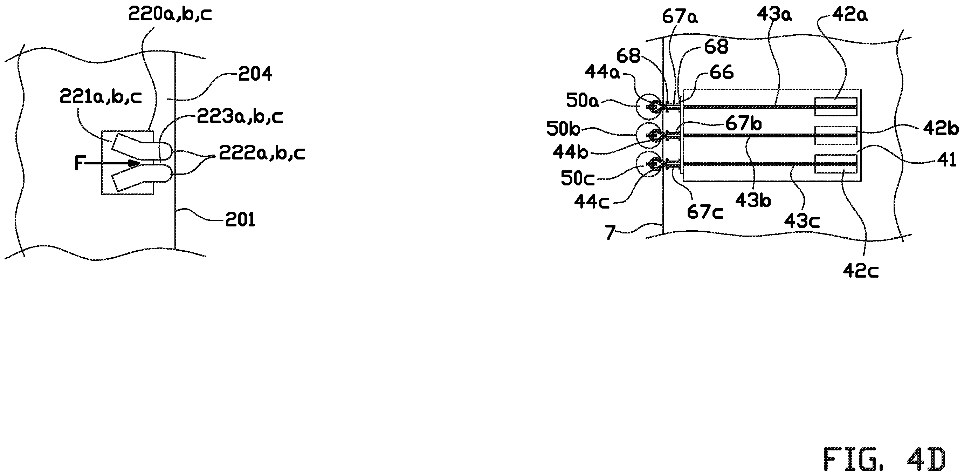

As best shown in figure 4A-D the catchers 220a-c comprise a cradle 221a-c that are recessed in the upper deck 204 and two tubes 222a-c that are curved backwards away from the water 2. The tubes 222a-c extend from the upper deck 204 adjacent to the cradle 221a-c and parallel to each other and curve towards and over the cradle 204 to an orientation with a small angle away from the upper deck 204. The tubes 222a-c define a slot 223a-c between them having as from the upper deck 204 to the curve a straight section and a flaring section from the curve onwards to the free end of the tubes 222a-c.

The mooring device 40 is shown in its entirety in figures 4A-C. The mooring device 40 comprises a base frame 41 that is fixed on the deck 5 near the side 7 of the hull 4. On the base frame 41 a first mooring winch 42a, second mooring winch 42b and third mooring winch 42c are provided, positioned parallel with each other. Around the drum of the first mooring winch 42a a first steel mooring cable 43a is wound, around the drum of the second mooring winch 42b a second steel mooring cable 43b is wound and around the drum of the third mooring winch 42c a third steel mooring cable 43c is wound, all steel mooring cables 43a-c having an end loop 44a-c at the free end. The mooring winches 42a-c are each provided with an electric or hydraulic drum drive with a constant cable tension controller to keep the mooring cables 43a-c under a substantially constant bias when the controller is activated. At the opposite side a steel abutment plate 66 extends from the base frame 41, having a hole or a set of surrounding rollers for each mooring cable 43a-c to guide the mooring cables 43a-c horizontally and parallel with each other over the base frame 41. The mooring cables 43a-c each pass through a bushing 67a-c that can loosely slide along the mooring cables 43a-c.

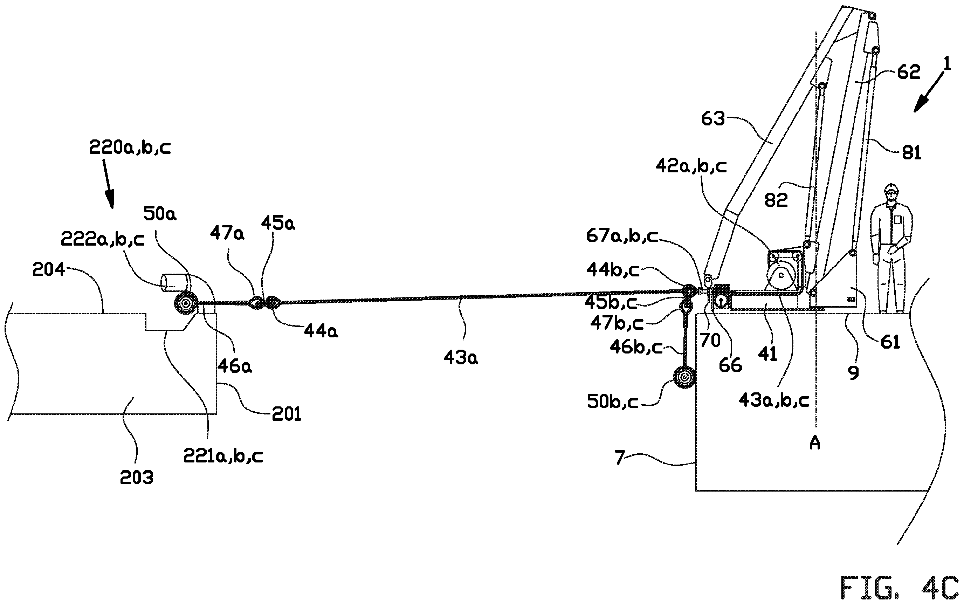

The mooring winches 42a-c can apply a pretension force on the mooring cables 43a-c whereby the end loops 44a-c abut the bushings 67a-c to keep them in abutment with the abutment plate 66. In this position the bushings 67a-c project horizontally from the abutment plate 66. As best shown in figure 4C, the end loops 44a-c of the mooring cables 43a-c are connected to the end loop 47a-c of a steel end cable 46a-c by means of a shackle 45a-c. The diameter of the end cable 46a-c is larger than the diameter of the mooring cables 43a-c. At the opposite side the end cable 46a-c is connected with a steel end ball or headache ball 50a-c.

As best shown in figure 4A the mooring device 40 comprises a manipulator 60 having a crane body 61 that can rotate around a vertical axis A by means of an hydraulic motor that is not shown. The crane body 61 carries a manipulator arm comprising a boom 62 and a jib 63. The boom has a hinged connection to the crane body 61 and can swing in direction B around a horizontal axis by means of a first hydraulic cylinder 81. At the opposite side the jib 63 can swing with respect to the boom 62 in direction C by means of a second hydraulic cylinder 82. The hydraulics of the mooring device 40 is remotely controlled from the deck 5. The free end of the jib 63 carries a hook 70 with a slot suitable to catch the bushings 67a-c, wherein the bushings 67a-c remain confined in its axial direction in the hook 70. In the fully retracted position of the boom 62 and the jib 63, the hook 70 is positioned in front of the abutment plate 66 and near the bushings 67a-c projecting from the abutment plate 66.

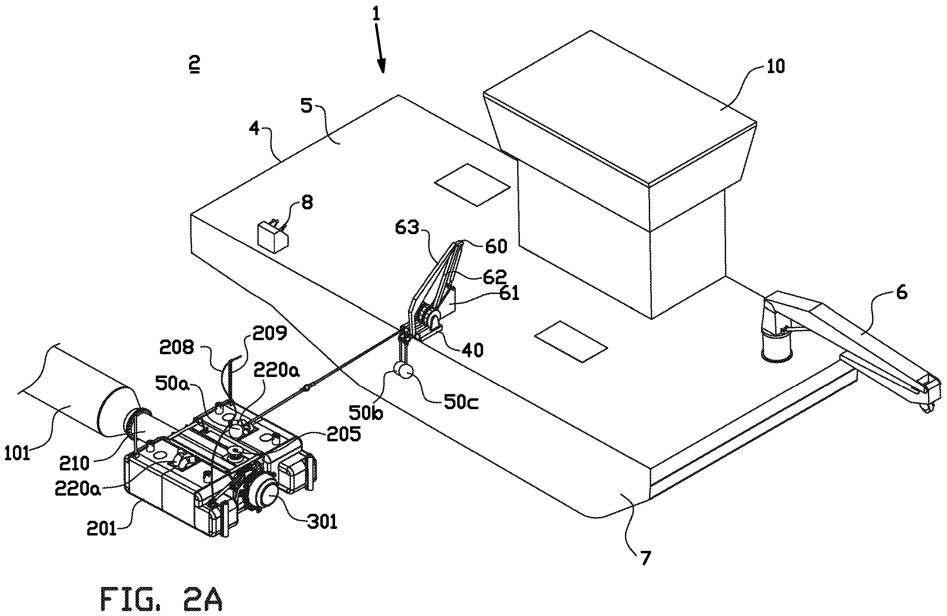

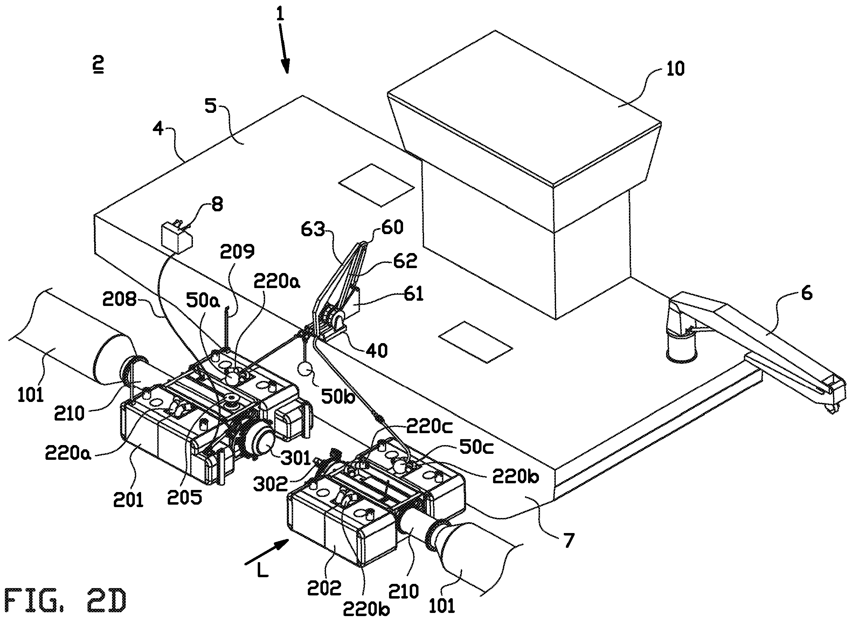

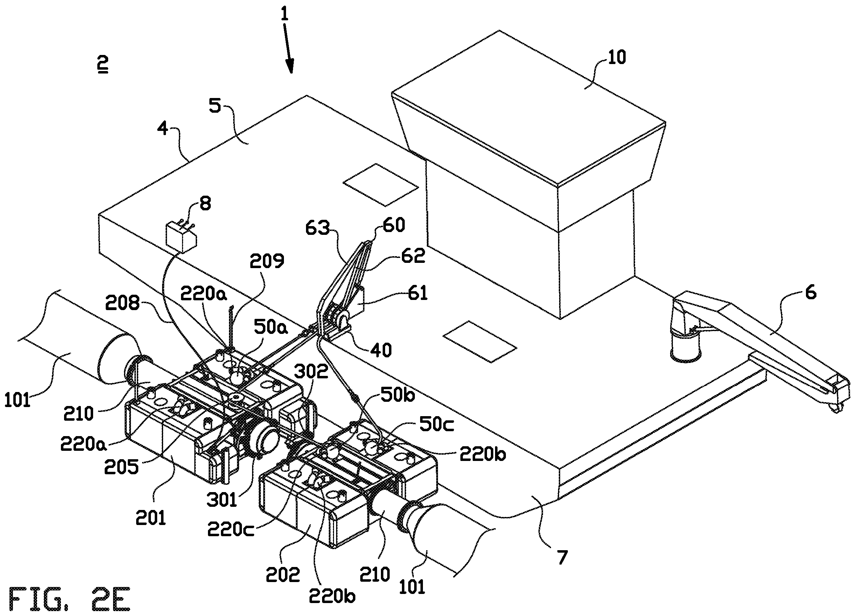

Connecting two floating pipeline strands 100 is performed after sequentially mooring the coupling parts 201, 202 along the working vessel 1. The mooring of the first coupling part 201 by means of the mooring device 40 is illustrated by referring to figures 2A and 4A-C. Firstly, the working vessel 1 maneuvers in the vicinity of and substantially parallel to the first coupling part 201 of the floating pipeline strand 100. Subsequently, the mooring device 40 catches a first bushing 67a in the hook 70. Subsequently, the boom 62 and the jib 63 reach out towards the coupling part 201, whereby a first mooring cable 43a is paid out by a first mooring winch 42a under the pretension on the first mooring cable 43a that is kept constant by the constant tension controller of the drum drive of the first mooring winch 42a.

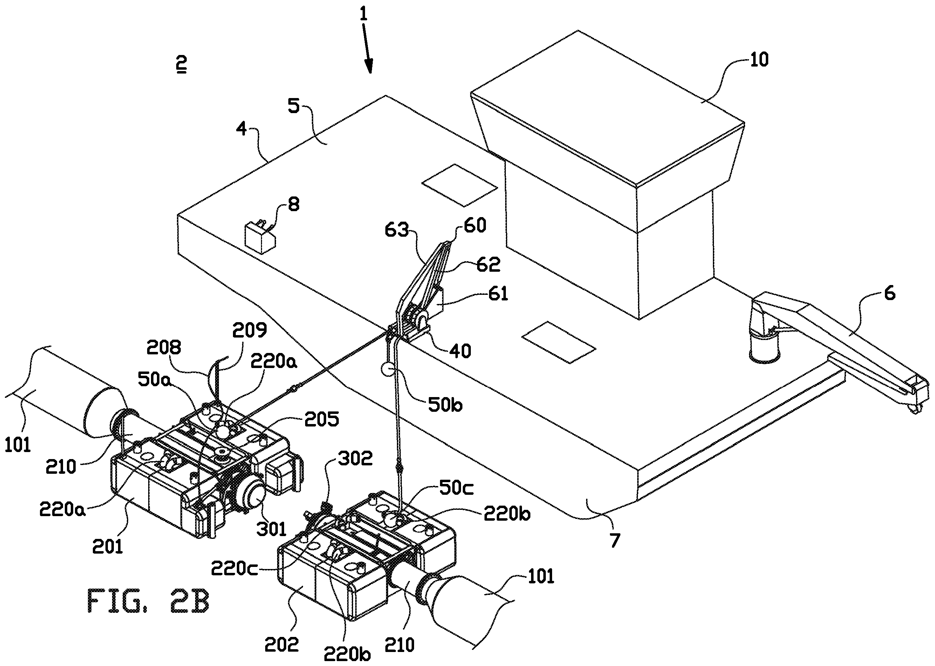

In this manner the first mooring cable 43a is kept substantially straight between the abutment plate 66 and the engaged first bushing 67a. A first end cable 46a with a first end ball 50a depends freely downwards from a first shackle 45a, wherein the first end cable 46a keeps the first end ball 50a at a fixed distance from the hook 70 whereby it can be seen by the human operator from the deck 5 with oversight. At the last stage the operator maneuvers the first end ball 50a from the open back side in direction E into the first catcher 220a. Subsequently the boom 62 and jib 63 are retracted whereby the first end ball 50a is further confined and the first end cable 46a is slid in direction F into the straight slot 223a-c section between the tubes 222a-c. The boom 62 and jib 63 are brought back to the fully retracted position, wherein the first mooring cable 43a and the first end cable 46a initially hang down loosely. By swinging back to the center position around axis A the first bushing 67a is released from the hook 70. Subsequently the working vessel 1 maneuvers to the second coupling part 202 of a floating pipeline section 100. The second coupling part 202 is connected to a second mooring cable 43c with a second end cable 46c the same manner, whereby the mooring device 40 has installed two mooring cables 43a, 43c that spread out from the abutment plate 66 in a triangular configuration as shown in figure 2B.

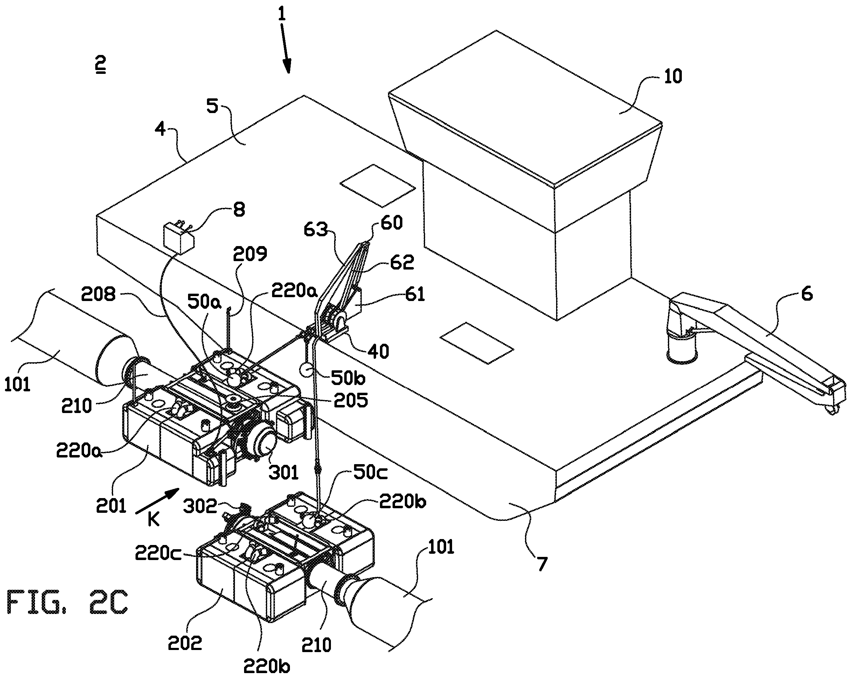

As best shown in figures 2C-E the first coupling part 201 is pulled towards the side 7 of the working vessel 1 in direction K by paying in mooring cable 43a by means of the winch 42a and the second coupling part 202 is pulled towards the side 7 of the working vessel 1 in direction L by paying in mooring cable 43b by means of the winch 42b. The two coupling parts 201, 202 are then situated along the side 7 with the first connector 301 facing the second connector 302 aligned along the center line S of the floating pipeline strands 100. Subsequently the hydraulic hose 208 hanging from a rod 209 is picked up from the first coupling part 201 using a boat hook for example and attached to the hydraulic system of the working vessel 1. The hydraulic cylinder 207 is operated from the deck 5 to open the first connector 301. The mooring device 40 is used in the same manner as described above to engage the third mooring cable 43b to the third catcher 220c at the upper deck 204 of the second coupling part 202. Subsequently the mooring device 40 mounts the third mooring cable 43b around the sheave 205 at the upper deck 204 of the first coupling part 201 and by gently paying in the third mooring cable 43b the coupling parts 201, 202 are brought together in direction M as shown in figure 1, bringing the first connector 301 in abutment with the second connector 302. During this operation the hydraulic cylinder 207 is operated from the deck 5 to make the coupling of the floating pipeline strands 100 by closing the first connector 301.

The coupling assembly 200 with the connected pipeline strands 100 can be released from the working vessel 1 by reaching out the boom 62 and the jib 63 again with one of the bushings 67a-c engaged in the hook 70 to lift the end ball 50a-c out of the respective catchers 220a-c.

When the floating pipeline thus installed needs to be broken up again, the coupling assembly 200 is pulled towards the side 7 of the working vessel 1 in the same manner as described above. Subsequently the first connector 301 is opened by operating the hydraulic cylinder 207 thereby releasing second connector 302 from the first connector 301 and the coupling parts 201, 202 are released from the working vessel 1.

By using the coupling assembly 200 according to the invention, there is no need to manually handle the mooring cables 43a-c during pulling the pipeline strands 100 to the side 7 of the working vessel 1 and bringing them together. The need to transfer a human operator to the coupling assembly 200 to operate the hydraulic cylinder 207 is abolished. Both are highly dangerous activities as it requires to handle and/or operate heavy equipment in a harsh environment.

## Claims

1. Assembly comprising a floating pipeline (100) and a working vessel (1) in the vicinity of the pipeline, wherein the pipeline comprises multiple floating pipeline sections (101) and a coupling assembly (200) for mutual coupling of subsequent pipeline sections, wherein the coupling assembly comprises a first buoyancy body (203) and a first connector (301) at the end of a first pipeline section, and a second buoyancy body (203) and a second connector (302) at the end of a second pipeline section for connecting cooperation with the first connector, and wherein the working vessel (1) comprises a hull (4), a first winch (42a) on the hull, and a first mooring cable (43a) around the first winch having a first fixation part (50a) at its free end, **characterized in that** the working vessel furthermore comprises a second winch (42b) and a third winch (42c) on the hull, a second mooring cable (43b) around the second winch having a second fixation part (50b) at its free end, a third mooring cable (43c) around the third winch having a third fixation part (50c) at its free end, and a manipulator arm (61, 62) on the hull for manipulation of the fixation parts with respect to the hull, and wherein the coupling assembly (200) comprises a first catcher (220a) on the first buoyancy body for fixating cooperation with the first fixation part, a second catcher (220b) on the second buoyancy body for fixating cooperation with the second fixation part, a third catcher (220c) on the second buoyancy body for fixating cooperation with the third fixation part, and a mooring cable guide (205) on the first buoyancy body for guidance of the third mooring cable (43c) via the first buoyancy body to the second buoyancy body.

2. Assembly according to claim 1, wherein the third catcher (220c) and the mooring cable guide (205) are aligned in the longitudinal direction of the coupled pipeline sections (101).

3. Assembly according to any one of the preceding claims, wherein the mooring cable guide (205) comprises a sheave (205) that is rotatable mounted to the first buoyancy body.

4. Assembly according to any one of the preceding claims, wherein the first connector (301) and the second connector (302) comprise a first tube (210) and a second tube (210) that pass through the first buoyancy body (203) and second buoyancy body (203), respectively, wherein the coupling assembly comprises first catchers (220a) on the first buoyancy body on opposite sides of the first tube, and second catchers (220b) on the second buoyancy body on opposite sides of the second tube.

5. Assembly according to any one of the preceding claims, wherein the fixation parts (50a-c) hang freely downwards and spaced apart from the manipulator arm (61, 62) when the mooring cables (43a-c) are transferred to the catchers by the manipulator.

6. Assembly according to any one of the preceding claims, wherein the fixation parts (50a-c) comprise a rigid body that is connected with the mooring cable (43a-c), and wherein the catchers (220a-c) comprise abutment faces (222a-c) for the rigid body that together define a vertically extending slot (223a-c) for passing through the mooring cable while the rigid body is in abutment with the abutment faces.

7. Assembly according to any one of the preceding claims, wherein the first connector (301) or the second connector (302) comprises a locking ring or spring ring for locking or releasing the mutual coupling, wherein the coupling assembly comprises an hydraulic cylinder (207) for operating the locking ring or spring ring, wherein the hydraulic cylinder is connected with an hydraulic valve (8) on the working vessel (1) via an hydraulic hose (208) that is connected with the working vessel by means of a releasable hydraulic coupling.

8. Assembly according to any one of the preceding claims, wherein the first connector (301) and the second connector (302) form a male-female coupling.

9. Assembly according to any one of the preceding claims, wherein multiple pipeline sections (101) form a floating pipeline strand (100), wherein the outermost pipeline sections of subsequent pipeline strands are provided with the coupling assembly (200).

10. Method for assembling a floating pipeline (100) by means of a working vessel (1), wherein the pipeline comprises multiple floating pipeline sections (101) and a coupling assembly (200) for mutual coupling of subsequent pipeline sections, wherein the coupling assembly comprises a first buoyancy body (203) and a first connector (301) at the end of a first pipeline section, and a second buoyancy body (203) and a second connector (302) at the end of a second pipeline section for connecting cooperation with the first connector, and wherein the working vessel (1) comprises a hull, a first winch (42a) on the hull, and a first mooring cable (43a) around the first winch having a first fixation part (50a) at its free end, **characterized in that** the working vessel furthermore comprises a second winch (42b) and a third winch (42c) on the hull, a second mooring cable (43b) around the second winch having a second fixation part (50b) at its free end, a third mooring cable (43c) around the third winch having a third fixation part (50c) at its free end, and a manipulator arm (61, 62) on the hull for manipulation of the fixation parts with respect to the hull, and wherein the coupling assembly (200) comprises a first catcher (220a) on the first buoyancy body for fixating cooperation with the first fixation part, a second catcher (220b) on the second buoyancy body for fixating cooperation with the second fixation part, a third catcher (220c) on the second buoyancy body for fixating cooperation with the third fixation part, and a mooring cable guide (205) on the first buoyancy body for guidance of the third mooring cable (43c) via the first buoyancy body to the second buoyancy body, wherein the method comprises bringing the first buoyancy body and the second buoyancy body within reach of the manipulator arm (61, 62) of the working vessel, by means of the manipulator arm bringing the first fixation part (50a) in fixating cooperation with the first catcher (220a), by means of the manipulator arm bringing the second fixation part (50b) in fixating cooperation with the second catcher (220b), by means of the manipulator arm bringing the third mooring cable (43c) in engagement with the mooring cable guide (205) and bringing the third fixation part (50c) in fixating cooperation with the third catcher (220c), and hauling in at least the third mooring cable by means of the third winch (42a) whereby the first buoyancy body and the second buoyancy body float towards each other and the first connector (301) and the second connector (302) engage onto each other.

11. Method according to claim 10, wherein the first connector (301) or the second connector (302) comprises a locking ring or spring ring for locking or releasing the mutual coupling, wherein the coupling assembly comprises an hydraulic cylinder (207) for operating the locking ring or spring ring, wherein the hydraulic cylinder is connectable with an hydraulic valve (8) on the working vessel (1) via an hydraulic hose (208) that is connectable with the working vessel by means of a releasable hydraulic coupling, wherein the method comprises hauling in the hydraulic hose (208) from the working vessel and connecting it by means of the releasable hydraulic coupling, and operating the locking ring or spring ring by means of the hydraulic valve (8) on the working vessel.

## Patentansprüche

1. Anordnung, die eine treibende Rohrleitung (100) und ein Arbeitswasserfahrzeug (1) in der Nähe der Rohrleitung aufweist, wobei die Rohrleitung mehrere treibende Rohrleitungsabschnitte (101) sowie eine Kopplungsanordnung (200) zur gemeinsamen Kopplung von aufeinanderfolgenden Rohrleitungsabschnitten aufweist, wobei die Kopplungsanordnung einen ersten Auftriebskörper (203) und einen ersten Verbinder (301) an dem Ende eines ersten Rohrleitungsabschnittes sowie einen zweiten Auftriebskörper (203) und einen zweiten Verbinder (302) an dem Ende eines zweiten Rohrleitungsabschnittes zur Verbindungszusammenwirkung mit dem ersten Verbinder aufweist, und wobei das Arbeitswasserfahrzeug (1) einen Rumpf (4), eine erste Winde (42a) an dem Rumpf sowie ein erstes Verankerungskabel (43a) um die erste Winde mit einem ersten Befestigungsteil (50a) an seinem freien Ende aufweist, **dadurch gekennzeichnet, dass** das Arbeitswasserfahrzeug ferner eine zweite Winde (42b) und eine dritte Winde (42c) an dem Rumpf, ein zweites Verankerungskabel (43b) um die zweite Winde mit einem zweiten Befestigungsteil (50b) an seinem freien Ende, ein drittes Verankerungskabel (43c) um die dritte Winde mit einem dritten Befestigungsteil (50c) an seinem freien Ende, und einen Bedienarm (61, 62) an dem Rumpf zum Bedienen der Befestigungsteile in Bezug auf den Rumpf aufweist, und wobei die Kopplungsanordnung (200) einen ersten Auffänger (220a) an dem ersten Auftriebskörper zur Befestigungszusammenwirkung mit dem ersten Befestigungsteil, einen zweiten Auffänger (220b) an dem zweiten Auftriebskörper zur Befestigungszusammenwirkung mit dem zweiten Befestigungsteil, einen dritten Auffänger (220c) an dem dritten Auftriebskörper zur Befestigungszusammenwirkung mit dem dritten Befestigungsteil und eine Verankerungskabelführung (205) an dem ersten Auftriebskörper zur Führung des dritten Verankerungskabels (43c) über den ersten Auftriebskörper zu dem zweiten Auftriebskörper aufweist.

2. Anordnung gemäß Anspruch 1, bei der der dritte Auffänger (220c) und die Verankerungskabelführung (205) in der Längsrichtung der gekoppelten Rohrleitungsabschnitte (101) ausgerichtet sind.

3. Anordnung gemäß einem der vorhergehenden Ansprüche, wobei die Verankerungskabelführung (205) eine Antriebsscheibe (205) aufweist, die drehbar an dem ersten Auftriebskörper montiert ist.

4. Anordnung gemäß einem der vorhergehenden Ansprüche, bei der der erste Verbinder (301) und der zweite Verbinder (302) ein erstes Rohr (210) und ein zweites Rohr (210) aufweisen, die durch den ersten Auftriebskörper (203) beziehungsweise den zweiten Auftriebskörper (203) verlaufen, wobei die Kopplungsanordnung erste Auffänger (220a) an dem ersten Auftriebskörper auf gegenüberliegenden Seiten des ersten Rohres sowie zweite Auffänger (220b) an dem zweiten Auftriebskörper auf gegenüberliegenden Seiten des zweiten Rohres aufweist.

5. Anordnung gemäß einem der vorhergehenden Ansprüche, bei der die Befestigungsteile (50a-c) von dem Bedienarm (61, 62) frei nach unten hin und beabstandet hängen, wenn die Verankerungskabel (43a-c) durch den Bediener zu den Auffängern überführt werden.

6. Anordnung gemäß einem der vorhergehenden Ansprüche, bei der die Befestigungsteile (50a-c) einen steifen Körper aufweisen, der mit dem Verankerungskabel (43a-c) verbunden ist, und bei der die Auffänger (220a-c) Anstoßflächen (222a-c) für den steifen Körper aufweisen, die gemeinsam einen sich vertikal erstreckenden Schlitz (223a-c) definieren, durch den hindurch das Verankerungskabel verläuft, während der steife Körper gegen die Anstoßflächen anstößt.

7. Anordnung gemäß einem der vorhergehenden Ansprüche, bei der der erste Verbinder (301) oder der zweite Verbinder (302) einen Verriegelungsring oder einen Federring zum Verriegeln oder Lösen der gemeinsamen Kopplung aufweist, wobei die Kopplungsanordnung einen hydraulischen Zylinder (207) zum Betätigen des Verriegelungsrings oder Federrings aufweist, wobei der hydraulische Zylinder über einen hydraulischen Schlauch (208), der über eine lösbare hydraulische Kopplung mit dem Arbeitswasserfahrzeug verbunden ist, mit einem hydraulischen Ventil (8) an dem Arbeitswasserfahrzeug (1) verbunden ist.

8. Anordnung gemäß einem der vorhergehenden Ansprüche, bei der der erste Verbinder (301) und der zweite Verbinder (302) eine Stecker-Buchse-Kopplung ausbilden.

9. Anordnung gemäß einem der vorhergehenden Ansprüche, bei der die mehreren Rohrleitungsabschnitte (101) einen treibenden Rohrleitungsstrang (100) ausbilden, wobei die am weitesten außen gelegenen Rohrleitungsabschnitte aufeinanderfolgender Rohrleitungsstränge mit der Kopplungsanordnung (200) versehen sind.

10. Verfahren zur Montage einer treibenden Rohrleitung (100) mithilfe eines Arbeitswasserfahrzeug (1), wobei die Rohrleitung mehrere treibende Rohrleitungsabschnitte (101) sowie eine Kopplungsanordnung (200) zur gemeinsamen Kopplung von aufeinanderfolgenden Rohrleitungsabschnitten aufweist, wobei die Kopplungsanordnung einen ersten Auftriebskörper (203) und einen ersten Verbinder (301) an dem Ende eines ersten Rohrleitungsabschnittes sowie einen zweiten Auftriebskörper (203) und einen zweiten Verbinder (302) an dem Ende eines zweiten Rohrleitungsabschnittes zur Verbindungszusammenwirkung mit dem ersten Verbinder aufweist, und wobei das Arbeitswasserfahrzeug (1) einen Rumpf (4), eine erste Winde (42a) an dem Rumpf sowie ein erstes Verankerungskabel (43a) um die erste Winde mit einem ersten Befestigungsteil (50a) an seinem freien Ende aufweist, **dadurch gekennzeichnet, dass** das Arbeitswasserfahrzeug ferner eine zweite Winde (42b) und eine dritte Winde (42c) an dem Rumpf, ein zweites Verankerungskabel (43b) um die zweite Winde mit einem zweiten Befestigungsteil (50b) an seinem freien Ende, ein drittes Verankerungskabel (43c) um die dritte Winde mit einem dritten Befestigungsteil (50c) an seinem freien Ende, und einen Bedienarm (61, 62) an dem Rumpf zum Bedienen der Befestigungsteile in Bezug auf den Rumpf aufweist, und wobei die Kopplungsanordnung (200) einen ersten Auffänger (220a) an dem ersten Auftriebskörper zur Befestigungszusammenwirkung mit dem ersten Befestigungsteil, einen zweiten Auffänger (220b) an dem zweiten Auftriebskörper zur Befestigungszusammenwirkung mit dem zweiten Befestigungsteil, einen dritten Auffänger (220c) an dem dritten Auftriebskörper zur Befestigungszusammenwirkung mit dem dritten Befestigungsteil und eine Verankerungskabelführung (205) an dem ersten Auftriebskörper zur Führung des dritten Verankerungskabels (43c) über den ersten Auftriebskörper zu dem zweiten Auftriebskörper aufweist, wobei das Verfahren folgende Schritte aufweist: Bringen des ersten Auftriebskörpers und des zweiten Auftriebskörpers in die Reichweite des Bedienarms (61, 62) des Arbeitswasserfahrzeuges, indem der Bedienarm das erste Befestigungsteil (50a) in Befestigungszusammenwirkung mit dem ersten Auffänger (220a) bringt, indem der Bedienarm das zweite Befestigungsteil (50b) in Befestigungszusammenwirkung mit dem zweiten Auffänger (220b) bringt, indem der Bedienarm das dritte Verankerungskabel (43c) in Eingriff mit der Verankerungskabelführung (205) bringt und das dritte Befestigungsteil (50c) in Befestigungszusammenwirkung mit dem dritten Auffänger (220c) bringt, und Einholen zumindest des dritten Verankerungskabels mittels der dritten Winde (42a), wodurch der erste Auftriebskörper und der zweite Auftriebskörper zueinander hin treiben und der erste Verbinder (301) und der zweite Verbinder (302) einander in Eingriff nehmen.

11. Verfahren gemäß Anspruch 10, bei dem der erste Verbinder (301) oder der zweite Verbinder (302) einen Verriegelungsring oder einen Federring zum Verriegeln oder Lösen der gemeinsamen Kopplung aufweist, wobei die Kopplungsanordnung einen hydraulischen Zylinder (207) zum Betätigen des Verriegelungsrings oder Federrings aufweist, wobei der hydraulische Zylinder über einen hydraulischen Schlauch (208), der über eine lösbare hydraulische Kopplung mit dem Arbeitswasserfahrzeug verbindbar ist, mit einem hydraulischen Ventil (8) an dem Arbeitswasserfahrzeug (1) verbindbar ist, wobei da Verfahren ein Einholen des hydraulischen Schlauches (208) aus dem Arbeitswasserfahrzeug und ein Verbinden desselben mittels der lösbaren hydraulischen Kopplung sowie ein Betätigen des Verriegelungsrings oder Federrings mittels des hydraulischen Ventils (8) an dem Arbeitswasserfahrzeug aufweist.

## Revendications

1. Assemblage comprenant un pipeline flottant (100) et un bateau de travail (1) au voisinage du pipeline, dans lequel le pipeline comprend de multiples sections de pipeline flottant (101) et un assemblage de couplage (200) pour un couplage mutuel de sections de pipeline consécutives, dans lequel l'assemblage de couplage comprend un premier corps de poussée verticale de flottabilité (203) et un premier connecteur (301) au niveau de l'extrémité d'une première section de pipeline, et un second corps de poussée verticale de flottabilité (203) et un second connecteur (302) au niveau de l'extrémité d'une seconde section de pipeline pour une coopération en termes de connexion avec le premier connecteur, et dans lequel le bateau de travail (1) comprend une coque (4), un premier treuil du type cabestan (42a) sur la coque et un premier câble d'amarrage (43a) autour du premier treuil du type cabestan qui comporte une première partie de fixation (50a) au niveau de son extrémité libre, **caractérisé en ce que** le bateau de travail comprend en outre un deuxième treuil du type cabestan (42b) et un troisième treuil du type cabestan (42c) sur la coque, un deuxième câble d'amarrage (43b) autour du deuxième treuil du type cabestan qui comporte une deuxième partie de fixation (50b) au niveau de son extrémité libre, un troisième câble d'amarrage (43c) autour du troisième treuil du type cabestan qui comporte une troisième partie de fixation (50c) au niveau de son extrémité libre et un bras de moyen de manipulation (61, 62) sur la coque pour la manipulation des parties de fixation par rapport à la coque, et dans lequel l'assemblage de couplage (200) comprend un premier moyen de capture et de réception (220a) sur le premier corps de poussée verticale de flottabilité pour une coopération en termes de fixation avec la première partie de fixation, un deuxième moyen de capture et de réception (220b) sur le second corps de poussée verticale de flottabilité pour une coopération en termes de fixation avec la deuxième partie de fixation, un troisième moyen de capture et de réception (220c) sur le second corps de poussée verticale de flottabilité pour une coopération en termes de fixation avec la troisième partie de fixation et un moyen de guidage de câble d'amarrage (205) sur le premier corps de poussée verticale de flottabilité pour le guidage du troisième câble d'amarrage (43c) via le premier corps de poussée verticale de flottabilité en direction du second corps de poussée verticale de flottabilité.

2. Assemblage selon la revendication 1, dans lequel le troisième moyen de capture et de réception (220c) et le moyen de guidage de câble d'amarrage (205) sont alignés dans la direction longitudinale des sections de pipeline couplées (101).

3. Assemblage selon l'une quelconque des revendications précédentes, dans lequel le moyen de guidage d'amarrage (205) comprend une poulie (205) qui est montée à rotation sur le premier corps de poussée verticale de flottabilité.

4. Assemblage selon l'une quelconque des revendications précédentes, dans lequel le premier connecteur (301) et le second connecteur (302) comprennent un premier tube (210) et un second tube (210) qui passent respectivement au travers du premier corps de poussée verticale de flottabilité (203) et du second corps de poussée verticale de flottabilité (203), dans lequel l'assemblage de couplage comprend des premiers moyens de capture et de réception (220a) sur le premier corps de poussée verticale de flottabilité sur des côtés opposés du premier tube et des deuxièmes moyens de capture et de réception (220b) sur le second corps de poussée verticale de flottabilité sur des côtés opposés du second tube.

5. Assemblage selon l'une quelconque des revendications précédentes, dans lequel les parties de fixation (50a-c) sont en suspension libre vers le bas et sont espacées du bras de moyen de manipulation (61, 62) lorsque les câbles d'amarrage (43a-c) sont transférés sur les moyens de capture et de réception par le moyen de manipulation.

6. Assemblage selon l'une quelconque des revendications précédentes, dans lequel les parties de fixation (50a-c) comprennent un corps rigide qui est connecté au câble d'amarrage (43a-c), et dans lequel les moyens de capture et de réception (220a-c) comprennent des faces de venue en butée (222a-c) pour le corps rigide qui, en association, définissent une fente s'étendant verticalement (223a-c) pour le passage au travers du câble d'amarrage tandis que le corps rigide est en butée contre les faces de venue en butée.

7. Assemblage selon l'une quelconque des revendications précédentes, dans lequel le premier connecteur (301) ou le second connecteur (302) comprend une bague de blocage ou une bague à ressort élastique pour bloquer ou libérer le couplage mutuel, dans lequel l'assemblage de couplage comprend un cylindre à fonction de vérin hydraulique (207) pour actionner la bague de blocage ou la bague à ressort élastique, dans lequel le cylindre à fonction de vérin hydraulique est connecté à une vanne hydraulique (8) sur le bateau de travail (1) via un tuyau souple hydraulique (208) qui est connecté au bateau de travail au moyen d'un couplage hydraulique pouvant être libéré.

8. Assemblage selon l'une quelconque des revendications précédentes, dans lequel le premier connecteur (301) et le second connecteur (302) forment un couplage mâle-femelle.

9. Assemblage selon l'une quelconque des revendications précédentes, dans lequel de multiples sections de pipeline (101) forment un tronçon de pipeline flottant (100), dans lequel les sections de pipeline les plus externes de tronçons de pipeline consécutifs sont munies de l'assemblage de couplage (200) .

10. Procédé pour assembler un pipeline flottant (100) au moyen d'un bateau de travail (1), dans lequel le pipeline comprend de multiples sections de pipeline flottant (101) et un assemblage de couplage (200) pour le couplage mutuel de sections de pipeline consécutives, dans lequel l'assemblage de couplage comprend un premier corps de poussée verticale de flottabilité (203) et un premier connecteur (301) au niveau de l'extrémité d'une première section de pipeline, et un second corps de poussée verticale de flottabilité (203) et un second connecteur (302) au niveau de l'extrémité d'une seconde section de pipeline pour une coopération en termes de connexion avec le premier connecteur, et dans lequel le bateau de travail (1) comprend une coque (4), un premier treuil du type cabestan (42a) sur la coque et un premier câble d'amarrage (43a) autour du premier treuil du type cabestan qui comporte une première partie de fixation (50a) au niveau de son extrémité libre, **caractérisé en ce que** le bateau de travail comprend en outre un deuxième treuil du type cabestan (42b) et un troisième treuil du type cabestan (42c) sur la coque, un deuxième câble d'amarrage (43b) autour du deuxième treuil du type cabestan qui comporte une deuxième partie de fixation (50b) au niveau de son extrémité libre, un troisième câble d'amarrage (43c) autour du troisième treuil du type cabestan qui comporte une troisième partie de fixation (50c) au niveau de son extrémité libre et un bras de moyen de manipulation (61, 62) sur la coque pour la manipulation des parties de fixation par rapport à la coque, et dans lequel l'assemblage de couplage (200) comprend un premier moyen de capture et de réception (220a) sur le premier corps de poussée verticale de flottabilité pour une coopération en termes de fixation avec la première partie de fixation, un deuxième moyen de capture et de réception (220b) sur le second corps de poussée verticale de flottabilité pour une coopération en termes de fixation avec la deuxième partie de fixation, un troisième moyen de capture et de réception (220c) sur le second corps de poussée verticale de flottabilité pour une coopération en termes de fixation avec la troisième partie de fixation et un moyen de guidage de câble d'amarrage (205) sur le premier corps de poussée verticale de flottabilité pour le guidage du troisième câble d'amarrage (43c) via le premier corps de poussée verticale de flottabilité en direction du second corps de poussée verticale de flottabilité, dans lequel le procédé comprend le fait d'amener le premier corps de poussée verticale de flottabilité et le second corps de poussée verticale de flottabilité à l'intérieur de la zone d'atteinte du bras de moyen de manipulation (61, 62) du bateau de travail, au moyen du fait que le bras de moyen de manipulation amène la première partie de fixation (50a) en coopération en termes de fixation avec le premier moyen de capture et de réception (220a), au moyen du fait que le bras de moyen de manipulation amène la deuxième partie de fixation (50b) en coopération en termes de fixation avec le deuxième moyen de capture et de réception (220b), au moyen du fait que le bras de moyen de manipulation amène le troisième câble d'amarrage (43c) en engagement avec le moyen de guidage de câble d'amarrage (205) et amène la troisième partie de fixation (50c) en coopération en termes de fixation avec le troisième moyen de capture et de réception (220c), et l'exercice d'une traction dans au moins le troisième câble d'amarrage au moyen du troisième treuil du type cabestan (42a), d'où il résulte que le premier corps de poussée verticale de flottabilité et le second corps de poussée verticale de flottabilité flottent en direction l'un de l'autre et le premier connecteur (301) et le second connecteur (302) sont engagés l'un sur l'autre.

11. Procédé selon la revendication 10, dans lequel le premier connecteur (301) ou le second connecteur (302) comprend une bague de blocage ou une bague à ressort élastique pour bloquer ou libérer le couplage mutuel, dans lequel l'assemblage de couplage comprend un cylindre à fonction de vérin hydraulique (207) pour actionner la bague de blocage ou la bague à ressort élastique, dans lequel le cylindre à fonction de vérin hydraulique peut être connecté à une vanne hydraulique (8) sur le bateau de travail (1) via un tuyau souple hydraulique (208) qui peut être connecté au bateau de travail au moyen d'un couplage hydraulique libérable, dans lequel le procédé comprend le fait d'exercer une traction dans le tuyau souple hydraulique (208) depuis le bateau de travail et sa connexion au moyen du couplage hydraulique libérable, et l'actionnement de la bague de blocage ou de la bague à ressort élastique au moyen de la vanne hydraulique (8) sur le bateau de travail.
